(19) Europäisches Patentamt / European Patent Office / Office européen des brevets

(11) **EP 4 398 043 A1**

(12) **EUROPEAN PATENT APPLICATION**

(43) Date of publication:
**10.07.2024 Bulletin 2024/28**

(21) Application number: **23214514.4**

(22) Date of filing: **06.12.2023**

(51) International Patent Classification (IPC):
**G03H 1/22** *(2006.01)*

(52) Cooperative Patent Classification (CPC):
**G03H 1/2294; G03H 1/22; G03H 1/2205;**
G03H 2001/2207; G03H 2001/221;
G03H 2001/2215; G03H 2001/2247; G03H 2227/03

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 GB 202300194**

(71) Applicant: **Envisics Ltd.**
**Milton Keynes MK1 1PT (GB)**

(72) Inventor: **COLE, Alexander**
**Milton Keynes, MK1 1PT (GB)**

(74) Representative: **Greenaway, Martin William**
**Apollo House**
**6 Bramley Road**
**Milton Keynes MK1 1PT (GB)**

(54) **CALIBRATION OF A PICTURE GENERATING UNIT**

(57)     A method of calibrating a picture generating unit. The method comprises displaying a pattern corresponding to a picture on a spatial light modulator. The method further comprises propagating light along a propagation axis wherein the light illuminates the spatial light modulator so as to spatially modulate the light. A first portion of the propagation axis passes through a first lens of the picture generating unit. The method further comprises changing the position of the first portion of the propagation axis with respect to an optical axis of the first lens. In some embodiments, the first portion of the propagation axis is substantially parallel to the optical axis of the first lens.

Figure 6

EP 4 398 043 A1

## Description

### FIELD

The present disclosure relates to a picture generating unit and a method of calibrating a picture generating unit. More specifically, the present disclosure relates to a picture generating unit for forming images by displaying a hologram on a display device and calibrating the picture generating unit to compensate for pointing errors. Some embodiments relate to a head-up display comprising the picture generating unit. Some embodiments relate to calibrating the picture generating unit by moving a lens of the picture generating unit.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

## SUMMARY

Aspects of the present disclosure are defined in the appended independent claims.

In general terms, there is provided a method of calibrating a picture generating unit to compensate for pointing errors / misalignments of the picture generating unit and a corresponding (calibrated or calibratable) picture generating unit. The method of calibration of the current disclosure is fast and simple without adversely affecting the images formed by the picture generating unit.

A picture generating unit may comprise a light source such as a laser. A picture generating unit may comprise a plurality of other components such as one or more optical components (such as one or more lenses and / or one or more mirrors) and a display device (such as a spatial light modulator, for example a liquid crystal on silicon spatial light modulator). The picture generating unit may be arranged such that light from the light source propagates through picture generating unit along a propagation axis. In other words, the propagation axis may represent the path travelled by light through the picture generating unit. In some embodiments, the propagation axis could also be called an optical axis or projection axis of the picture generating unit. The propagation axis may be defined at / aligned with the centre of a beam of light emitted by the light source. The propagation axis may connect the components of the picture generating unit. For example, the propagation axis may pass through the one or more lenses of the picture generating unit. The propagation axis may be reflected / turned by the one or more mirrors. The propagation axis may be reflected / turned by the display device.

The picture generating unit may further comprise a target. The target may represent an intended location where spatially modulated light is centred after having passed through the other components of the picture generating unit. In some embodiments, the target may be a physical feature, such as a feature of the picture generating unit. For example, the picture generating unit may comprise a light receiving surface such as a diffuser. At least a portion of the light receiving surface may comprise the target (in other words, the target is a physical feature). In other embodiments, the target may be a notional region of space where light is intended to be received, or required. In either case, the target represents an intended location where spatially modulated light may be received after having passed through the rest of the picture generating unit. In many cases, it is important that the light is accurately received (e.g. positioned) at the target, and is not, for example, offset from the target. This may ensure that a picture / image formed by the picture generating unit is clear. For the avoidance of doubt, the picture / image corresponds to the spatially modulated light. In some embodiments, the picture / image is a holographic reconstruction and the spatially modulated light is spatially modulated in accordance with a hologram of the picture / image displayed on the spatial light modulator / display device. In some embodiments, light received at the target may comprise a so-called DC spot (zero order noise). The picture generating unit may be arranged to remove the DC spot (zero order noise). For example, a block or mask may be provided which is arranged to separate the DC spot (zero order noise) from the rest of the light propagating along the propagation axis. The DC spot / zero order noise may be central within the beam of spatially modulated light. The block or mask may be arranged such that light at the centre of the light beam is treated differently to light outside of the centre of the light beam. For example, light at the centre of the light beam may be absorbed and / or reflected while light outside of the centre of the light beam may be transmitted (or vice versa). The effect of this may be to remove the DC spot. Clearly, if the DC spot is to be correctly removed, the picture generating unit must be correctly aligned. The picture generating unit may be determined to be correctly aligned when light is received at the target as intended. Any offset between the target and the light received at the target may mean that at least some DC spot light may be unintentionally transmitted to a viewing system and at least some non-DC spot light may unintentionally be removed. In some embodiments, the target may comprise a component arranged to remove DC spot light. For example, the target may comprise at least a portion of a block or mask arranged to remove DC spot light.

Clearly, it is important that the spatially modulated light reaches / is aligned with the intended target. But this may only occur if the picture generating unit is correctly aligned. It is very difficult to repeatedly and reliably manufacture a picture generating unit that is correctly aligned such that light of the light source satisfactorily reaches the target. For example, very small misalignments in each of the optical components may result in significant deviation from the target. Furthermore, the light source itself may be misaligned causing further deviation of the light from the target. Furthermore, the centre of the beam profile of the light emitted by the light source may be offset from propagation axis, particularly if the light source is a laser. Again this may cause misalignments / errors in the images formed using the picture generating unit. Each of these misalignments / errors may be referred to as a pointing error of the picture generating unit. The skilled person will be familiar with pointing errors. In order to ensure that light from the light source is received at the target, a calibration of the picture generating unit is necessary to compensate / correct for the pointing error.

Previously, calibration has comprised ensuring that each individual component of the picture generating unit is correctly aligned. This may comprise assembling the various components of the picture generating unit, propagating light through the picture generating unit, measuring the pointing error, locating a source of the pointing error (for example, a misalignment in one or more of the components), and making adjustments to the respective component. Each component (e.g. lens or mirror or display device) has many degrees of freedom, any or each of which could be misaligned. The misalignment could include a translational misalignment in any or each of three orthogonal dimensions. The misalignment could include a rotational and / or tilt misalignment. Furthermore, the propagation axis connects all the components of the picture generating unit (as above), so adjusting one component will affect the propagation axis downstream of that component, through each of the later components. All this means that multiple iterations of adjustment of the components are generally needed during calibration, with checks for further pointing errors and further adjustments needed during each iteration, before the picture generating unit is satisfactorily calibrated (such that the spatially modulated light is aligned at the target). Thus, calibrating a picture generating unit may be very slow and laborious and may rely heavily on trial and error. Furthermore, in current methods, the components of the picture generating unit may be permanently fixed in place only after calibration has been achieved (and the components of the picture generating unit adjusted to removed pointing error). Thus, calibration is effectively part of the manufacturing process in current methods and so calibration may generally need to take place on the manufacturing line. Given the slow nature of the calibration, a limit is placed on the rate of production of picture generating units.

The inventors have surprisingly found that, instead of checking that each individual component is correctly aligned, calibration can be achieved by changing the position of a first lens of the picture generating unit relative to the propagation axis (for example, by moving - such as translating - the first lens with respect to the propagation axis). In particular, the inventors have surprisingly found that an intentional offset of the first lens with respect to the propagation axis (in other words, an intentional pointing error) can be selected which compensates for all other pointing errors or misalignments within the picture generating unit. Thus, there is no need for each of the components of the picture generating unit to be individually aligned. This substantially increases the speed (and reduces the complexity) of a process of calibrating a picture generating unit and correspondingly increases the rate of production of picture generating units which is important for mass production. Furthermore, only the first lens needs to be moved / moveable with respect to the propagation axis. So, during manufacture, the components of the picture generating unit (other than the first lens) may advantageously be permanently fixed in place. Again, this speeds up the manufacture of the picture generating unit. In some embodiments, this also introduces the possibility of the calibration being performed away from the manufacturing line. In some embodiments, a calibration step may comprise changing the first lens with respect to the propagation axis (on or away from the manufacturing line) and then permanently fixing the first lens in position. In some embodiments, a calibration step may comprise changing the (first portion) of the propagation axis with respect to the lens. For example, the picture generating unit may comprise a light source such as a laser. The light source may be arranged to emit light along the propagation axis. The light source may be said to define the propagation axis. The method may comprise the step of moving the light source. This may have the effect of moving the propagation axis. In some embodiments, the calibration may be performed continuously during operation of the picture generating unit. For example, the position of the first lens with respect to the propagation axis may be continuously adjusted to ensure that light is accurately received at the target. This may compensate for pointing errors that may otherwise be introduced during operation of the picture generating unit, for example as a result of thermal changes of the picture generating unit.

In some embodiments, the movement of the first lens with respect to the propagation axis is such that the propagation axis remains parallel to an optical axis or axis of symmetry of the first lens. For example, the first lens may be moved or moveable in a first plane. A normal of the first plane may be parallel to the portion of propagation axis that passes through the first lens. Moving the first lens in a single (first) plane (i.e. in only two dimensions) may advantageously simplify the motion of the first lens which may simplify the calibration.

There was a significant prejudice in the field against changing the position of the first lens with respect to the propagation axis. Given that the calibration of the picture generating unit has previously focussed on removing any misalignments / pointing errors, the idea of introducing an intentional offset / intentional pointing error of the first lens with respect to the propagation axis was counter-intuitive. Furthermore, it was generally believed that such an offset would substantially adversely affect the quality of an image formed by the picture generating unit. For example, it was believed that the introducing an offset would affect the DC spot size and have an unpredictable impact on the size and shape of the wavefront passing through the first lens. However, through extensive testing and simulation, the inventors have surprisingly found that image quality is minimally affected when an offset between the propagation axis and optical axis of the first lens is introduced. Furthermore, the inventors have found that the offset steers the light beam in a very predictable manner. So, an offset can simply and easily (and predictably) be selected to ensure that the picture generating unit is calibrated (i.e. so that light from the light source is correctly received at the target) without adversely affecting image quality.

In summary, the inventors have surprisingly found that a fast calibration method may be achieved by introducing an intentional offset of the first lens with respect to the propagation axis to predictably compensate for all other pointing errors and that doing so does not substantially adversely affect image quality (contrary to the prejudice in the field).

According to the first aspect, there is provided a method of calibrating a picture generating unit. The method comprises displaying a pattern corresponding to a picture on a display device such as a spatial light modulator. The method further comprises propagating light along a propagation (or projection) axis. The light illuminates the display device (e.g. spatial light modulator) so as to spatially modulate the light. The light may be spatially modulated in accordance with the pattern. A first portion of the propagation axis passes through a first lens of the picture generating unit. The method further comprises changing the position of the first portion of the propagation axis with respect to an optical axis (or axis of symmetry) of the first lens. This change in relative position may result in a change in an offset between the first portion of the propagation axis and the optical axis. As described above, an offset may be selected / determined / chosen to compensate for pointing errors / misalignments of the components of the picture generating unit and so calibrate the picture generating unit.

In some embodiments, the method may comprise changing the relative position of the first portion of the propagation axis and the optical axis of the first lens such that, in a first configuration, the optical axis of the first lens has a first relative position with respect to the first portion of the propagation axis and, in a second configuration, the optical axis of the first lens has a second relative position with respect to the first portion of the propagation axis. Moving the propagation axis with respect to the optical axis of the lens may have the effect of changing the steering of light through the first lens. Thus, the inventors have found that, by selecting appropriate relative positions of the optical axis of the first lens and the first portion of the propagation axis, the picture generating unit can be calibrated to compensate for pointing errors / alignment errors in the various components of the picture generating unit. As described previously, there is no need for the slow and laborious process of adjusting / calibrating each component individual.

An offset between the optical axis of the first lens and the first portion of the propagation axis may be different in the first configuration and the second configuration. As used herein, the "optical axis" of the first lens refers to a line passing through the centre of curvature of the lens. In some embodiments, the first lens is a spherical lens. In such embodiments, the optical axis of the lens may be equivalent to the axis of symmetry of the lens. As used herein, an "offset" is a measure of the misalignment of the optical axis of the first lens and the first portion of the propagation axis. The offset may have a magnitude (i.e. the magnitude of the distance between the (centre of) the propagation axis and the optical axis of the first lens). The offset may also have a direction. A magnitude and / or direction of the offset may be different in the first configuration and the second configuration. The magnitude of the offset may increase in the second configuration relative to the first configuration. There may be no offset in one of the first and second configurations. In other words, the optical axis of the first lens and the first portion of the propagation may be in alignment. The magnitude of the offset may be greater than zero in either or both of the first and second configurations. The change (in offset / relative position) between the first and second configurations may mean that the propagation axis passes through a different portion of the first lens in the first configuration than in the second configuration. This change may result in a change in the steering of light through the first lens. As above, appropriate steering may be selected to compensate for / calibrate for pointing errors of the system. As used herein, a "pointing error" refers to an error or inaccuracy in the alignment (of components of the picture generating unit) which results in the propagation axis "pointing" in a different direction to what was intended during design (i.e. the propagation axis is misaligned). For example, a picture generating unit may be designed with the intention that the propagation axis is aligned with at least a portion of a target, such as the centre of a target. For example, as described above, this may by so that the DC spot at the centre of the beam (more specifically, the centre of the zero-order replay field of a plurality of replay fields formed by diffraction from the pixelated display device) is removed / separated. A pointing error may result in the propagation axis being out of alignment with the respective portion of the target.

In some embodiments, the first portion of the propagation axis is (substantially) parallel to the optical axis of the first lens. The first portion of the propagation axis may remain substantially parallel to the optical axis of the first lens in both the first and second configuration. Changing the relative position of the optical axis of the first lens and the propagation axis while maintaining to the two axes parallel may advantageously simplify the calibration. This may be because the degrees of freedom of the motion of the first lens may be constrained to only two dimensions / directions. Furthermore, a simple mechanism may be employed to control the movement of the first lens when it need only move in two direction / dimensions.

In some embodiments, the pattern displayed on the display device (spatial light modulator) may be a diffractive pattern. In some embodiments, a hologram may be displayed on the display device (spatial light modulator). In other words, the diffractive pattern may be a hologram. The hologram may correspond to the picture. In such embodiments, the light that is output by the spatial modulator may be encoded with the hologram. The method may further comprise the step of calculating the hologram of the picture.

In some embodiments, the method further comprises the step of determining / measuring / quantifying a misalignment (pointing error) between a portion of the propagation axis and a target. Said portion may be a second portion of the propagation axis. The second portion of the propagation axis may be at or adjacent to the target. The target has been described previously and may be a region in space or at least a portion of a physical feature of the picture generating unit that is intended to receive light from the light source. In other words, in the absence of pointing errors (misalignments), light from the light source would be aligned with the target. For example, the (centre of) the propagation axis may be aligned (in line) with (a centre of) the target. The step of determining / measuring / quantifying the misalignment (pointing error) may be performed prior to changing the position of the first portion of the propagation axis with respect to the optical axis of the first lens. Preferably, changing the position of the first portion of propagation axis with respect to the optical axis of the first lens comprises changing the position to reduce / minimize / eliminate the misalignment. In other words, the relative position of the first lens and the first portion of the propagation axis may be changed in order to compensate for pointing error, as already discussed. In some embodiments, the target may be downstream of the spatial light modulator.

In some embodiments, the step of determining the misalignment comprises determining / measuring a position of the (second portion of the) propagation axis at or adjacent to the target. In some embodiments, the step of determining the misalignment comprises comparing the determined / measured position of the second portion of the propagation axis to the position of the target.

In some embodiments, the step of determining the misalignment comprises measuring a DC spot (zero order) of the propagated light. This may be at or adjacent to the target / at the second portion of the propagation axis. The step of measuring a DC spot of the propagated light may comprise measuring at least one of: a position of the DC spot; a misalignment of the DC spot with respect to the target; and an intensity of the DC spot at a fixed location. The step of changing the position of the first portion of the propagation axis with respect to the optical axis of the first lens may comprise changing the relative position of the first lens and the propagation axis to move the DC spot (at or adjacent to the target). In some embodiments, the step of moving the DC spot may reduce the misalignment between the DC spot and the target. As described above, some embodiments comprise separating / removing the DC spot. For example, the picture generating unit may comprise a block or mask, at least a portion of which is arranged to separate / remove / absorb the DC spot. In such embodiments, the step of changing the position of the first portion of the propagation axis with respect the optical axis of the first lens may comprise changing the relative position so as to minimize / eliminate the intensity of the DC spot. In such embodiments, it may be assumed that the DC spot is substantially completely removed when the components of the picture generating unit are correctly aligned / calibrated. So, the intensity and / or size of the DC spot may be used as a proxy for misalignment. Thus, a position of the first lens with respect to the propagation axis that minimizes the intensity of the DC spot may be assumed to be a position in which the picture generating unit is properly calibrated.

In some embodiments, the step of changing the position of the first portion of the propagation axis with respect to the optical axis of the first lens comprises moving the first lens. In such embodiments, the first lens may be the only moveable feature of the picture generating unit during this step. All other features of the picture generating unit (such as other lenses and / or mirrors and / or a light source and / or a display device) may be non-moveable). In some embodiments, the step of moving the first lens comprises moving the first lens in a first plane, the first plane having a normal that is parallel to the first portion of the propagation axis. Thus, moving the first lens in the first plane may result in a change in the offset between the propagation axis and the optical axis of the first lens. The first plane may comprise a first direction and a second direction orthogonal to the first direction. The first lens may be moveable in both the first direction and the second direction. The first lens may not be moveable in any other direction (in other words, the first lens may not be moveable in a direction that does not lie in the first plane).

In some embodiments, the step of changing the position of the first portion of the propagation axis with respect to the optical axis of the first lens comprises moving the first portion of the propagation axis. For example, the picture generating unit may comprise a light source such as a laser. The step of changing the position of the first portion of the propagation axis with respect to the optical axis of the first lens may comprise moving the light source. The light source may be moved or moveable such that the first portion of the propagation axis is moved or moveable in the (above described) first plane. This may mean that the propagation axis intersects or passes through the first lens at different points on the first plane.

At least some of the steps of the method may be computer-implemented. In particular, the step of changing the position of the first portion of the propagation axis with respect to the optical axis of the first lens and the optional step of determining the misalignment (pointing error) between the second portion of the propagation axis and the target to optionally reduce the misalignment, may be computer implemented. For example, an (at least partially) computer implemented method may comprise receiving signals from a detector corresponding to the misalignment and may further comprise calculating a change in the position of the first portion of the propagation axis with respect to an optical axis of the first lens in order to reduce that misalignment. The detector may be arranged to measure light intensity. The detector may be arranged to measure light intensity at the target. The target may be aligned with the DC spot (as above). The method may comprise calculating a change in the position of the portion of the portion of the propagation axis with respect to the optical axis of the first lens to minimize the light intensity. This calculation may be a computer-implemented step. This may be the case if the DC spot is blocked / removed upstream of the detector.

The first lens may comprise a varying thickness in a direction perpendicular to the propagation axis. The first lens may comprise at least a first curved surface. The first curved surface may be a convex curve. The first lens may comprise a second curved surface opposite to the first curved surface. The second curved surface may be a convex curve. The first lens may be a biconvex lens. In some embodiments, the first lens may be downstream of the spatial light modulator. In other embodiments, the first lens may be upstream of the spatial light modulator.

In some embodiments, the first lens is a Fourier lens. In such cases, the first (Fourier) lens is preferably downstream of the display device / spatial light modulator.

In some embodiments, the first lens is a collimating lens. In such embodiments, the picture generating unit may comprise a beam expander comprising the collimating lens. In such examples, the first lens may be a lens of the beam expander. The beam expander may be positioned between a light source and a display device (such as between a laser and liquid crystal on silicon spatial light modulator). The light source may emit collimated light. The beam expander may be arranged to expand the (collimated) light emitted by the light source. The beam expander may be further arranged to collimate the expanded beam. For example, the beam expander may comprise an input lens arranged to receive (collimated) light emitted by the light source and expand the light beam. The beam expander may comprise an output lens arranged to receive the expanded beam and collimate it. The first lens may be the input lens or the output lens of the beam expander. The first (collimating) lens may preferably be upstream of the display device / spatial light modulator. The inventors have recognised that, in some examples, it is advantageous for the first lens to be a lens of the beam expander (e.g. a collimating lens). This may be because the first lens is immediately downstream of the light source (for example, is closer to the light source than if the first lens were the Fourier lens). The inventors have recognised that, in this position, the beam size may be smaller than further downstream in the system. This may allow for finer control of the alignment of the propagation axis with the target.

The picture generating unit may comprise both a Fourier lens and a beam expander / collimating lens. However, only one of these lens may be the "first" lens in such embodiments. In particular, the method may comprise moving only one of these lenses with respect to the propagation axis, as described above. The picture generating unit may comprise any number of additional lenses, as required.

The picture generating unit may further comprise a mirror system comprising at least a first mirror, optionally at least a first mirror and second mirror. The first (and optional second) mirrors may be downstream of the display device / spatial light modulator. The propagation axis may connect each of mirrors of the mirror system. Light propagating along the propagation axis may be incident upon each mirror of the mirror system and may be reflected. So, the propagation axis may be reflected / turned by each mirror of the mirror system.

As above, each of the components of the picture generating unit may contribute to the pointing error / misalignment of the picture generating unit. For example, the Fourier lens; collimating lens; the first and second mirrors; the display device (spatial light modulator) and light source may each be misaligned and contribute to the overall pointing error of the picture generating unit. The position of the first portion of propagation axis with respect to the optical axis of the first lens may advantageously be changed to compensate / calibrate for this pointing error.

In a second aspect there is provided a picture generating unit. The picture generating unit comprises a display device such as a spatial light modulator. The display device (spatial light modulator) is arranged to display picture content. The picture generating unit further comprises a light source arranged to illuminate the display device (spatial light modulator) such that light is spatially modulated. The picture generating unit further comprises a first lens having an optical axis / axis of symmetry. The picture generating unit is arranged such that the light emitted by the light source propagates along a propagation axis. A first portion of the propagation axis passes through the first lens. The picture generating unit is further arranged such that the first portion of the propagation axis is (substantially) parallel to the optical axis / axis of symmetry of the first lens. The picture generating unit is arranged such that first portion of the propagation axis is offset from the optical axis (of the first lens). As described in relation to the first aspect, the offset may be selected to compensate for misalignment / pointing errors of the picture generating unit.

In some embodiments, a hologram may be displayed on the display device (spatial light modulator). The hologram may correspond to the picture. In other words, the pattern may be a hologram. In such embodiments, the light that illuminates the spatial modulator may be encoded with the hologram. The picture generating unit may further comprise a hologram engine arranged to calculate the hologram of the picture to be displayed on the display device (spatial light modulator).

In some embodiments, the picture generating unit further comprises a light receiving surface (diffuser) downstream of the spatial light modulator. The light receiving surface may be arranged such that a holographic reconstruction is formed or displayed thereon. In some embodiments, the picture generating unit comprises a Fourier lens. The Fourier lens may be positioned downstream of the display device (spatial light modulator). In some embodiments, the picture generating unit comprises a collimating lens. The Fourier lens or the collimating may be the first lens (described above). The collimating lens may be positioned upstream of the display device (spatial light modulator). The picture generating unit may further comprise a mirror system comprising at least a first mirror, optionally at least a first and second mirror. The first (and optional second) mirrors may be downstream of the display device / spatial light modulator. The propagation axis may connect each of mirrors of the mirror system. Light propagating along the propagation axis may be incident upon each mirror of the mirror system and may be reflected. The propagation axis may be reflected / turned by each mirror of the mirror system.

Each of the components of the picture generating unit may contribute to the pointing error / misalignment of the picture generating unit. For example one or more of the Fourier lens; collimating lens; the first and second mirrors; the display device (spatial light modulator) and light source may be misaligned and contribute to the overall pointing error of the picture generating unit. The offset of the first portion of propagation axis with respect to the optical axis of the first lens may advantageously be selected to compensate / calibrate for this pointing error.

In some embodiments, the picture generating unit may have a first configuration and a second configuration. In the first configuration, the optical axis of the first lens may have a first position relative to (or first perpendicular distance from) the first portion of the propagation axis (corresponding to a first offset). In the second configuration, the optical axis of the first lens may have a second position relative to (or second perpendicular distance from) the first portion of the propagation axis (corresponding to a second offset). The second relative position / second offset may be different to the first relative position / first offset. The second offset may be an offset that substantially compensates for misalignment / pointing errors of the picture generating unit. The first offset may be an offset in which misalignment / pointing errors of the picture generating unit are not substantially compensated for (i.e. in which a pointing error is present in the picture generating unit).

The picture generating unit may comprise a movement assembly (such as a translation or translatable assembly) configured to change the position of the first portion of the propagation axis with respect to an optical axis of the first lens. The movement assembly may be arranged to reconfigure the picture generating unit from the first configuration to the second configuration by changing the relative position of the first portion of the propagation axis and the optical axis of the first lens. In some embodiments, the movement assembly may be arranged to move the first lens. The movement assembly may be arranged so that the first lens is moveable in a first plane. A normal of the first plane may be parallel to the optical axis of the first lens.

The picture generating unit may further comprise a controller. The picture generating unit may further comprise a detector. The detector may be arranged to measure light received at or adjacent to the target. In one embodiment, the detector may be arranged to measure the intensity of light received at or adjacent to the target. The controller may be configured to receive signals from the detector. The signals may correspond to the light measured at or adjacent to the target. The controller may be configured to control the movement assembly and so control whether the picture generating unit is in the first configuration or the second configuration.

The controller may be configured to determine a misalignment (pointing error) between a second portion of the propagation axis and a target. The controller may be configured to do this while the picture generating unit is in the first configuration. The controller may be configured to determine a change in the relative position of the first portion of the propagation axis with respect to the optical axis of the first lens based on the determined misalignment. In particular, the controller may be configured to determine the second configuration of the picture generating unit. The controller may be configured to control the movement assembly to reconfigure the picture generating unit from the first configuration to the determined second configuration.

The picture generating unit may comprise a target (intended location) arranged to receive light from the light source. The offset of the first portion of the propagation axis relative to the optical axis (of the first lens) may be arranged such that the light is received at the target. In one example, picture generating unit may further comprise a block or mask downstream of the spatial light modulator arranged to remove DC spot (zero order light). At least a portion of the block or mask may form the target.

The controller may be configured to determine the misalignment by measuring the DC spot (zero order) of the propagated light. This measurement may be at or adjacent to the target / at the second portion of the propagation axis and may be based on signals received from the detector.

The controller may be configured to measure the DC spot of the propagated light based on at least one of: a position of the DC spot, a misalignment of the DC spot with respect to the target, and an intensity of the DC spot. The controller may be configured to change the position of the first portion of the propagation axis with respect to the optical axis of the first lens to changing the position to move the DC spot (at or adjacent to the target). The controller may be arranged to reduce the misalignment between the DC spot and the target (when the picture generating unit is in the (determined) second configuration).

In a third aspect, there is provided a head-up display system for a vehicle. The head-up display system comprises the picture generating unit of the second aspect. The head-up display system further comprises at least one free-form mirror.

Feature described in relation to the first aspect may apply to the system of the second aspect, and vice versa.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to $2\pi$) which represents the amount of phase retardation provided by that pixel. For example, a pixel of the spatial light modulator described as having a phase value of $\pi/2$ will retard the phase of received light by $\pi/2$ radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

BRIEF DESCRIPTION OF THE DRAWINGS

Specific embodiments are described by way of example only with reference to the following figures:

Figure 1 is a schematic showing a reflective SLM producing a holographic reconstruction on a screen;
Figure 2A illustrates a first iteration of an example Gerchberg-Saxton type algorithm;
Figure 2B illustrates the second and subsequent iterations of the example Gerchberg-Saxton type algorithm;
Figure 2C illustrates alternative second and subsequent iterations of the example Gerchberg-Saxton type algorithm;
Figure 3 is a schematic of a reflective LCOS SLM;
Figure 4 shows a schematic cross-section of a picture generating unit having a pointing error;
Figure 5A shows a schematic cross-section of a portion of the picture generating unit of Figure 4 in which a first lens of the picture generating unit has a first position relative to a propagation axis;
Figure 5B shows a schematic cross-section of a portion of the picture generating unit of Figure 5A in which the first lens has a second position relative to the propagation axis;
Figure 6 shows a schematic cross-section of a picture generating unit which has been calibrated to minimise pointing error by introducing an appropriate offset between the optical axis of the first lens and the propagation axis; and
Figure 7 is a flow chart of a method of calibrating a picture generating unit.

The same reference numbers will be used throughout the drawings to refer to the same or like parts.

DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other.

Some embodiments may be carried out independently from each other, or may be carried out together in co-dependent relationship.

Optical configuration of Holographic Picture Generating Unit

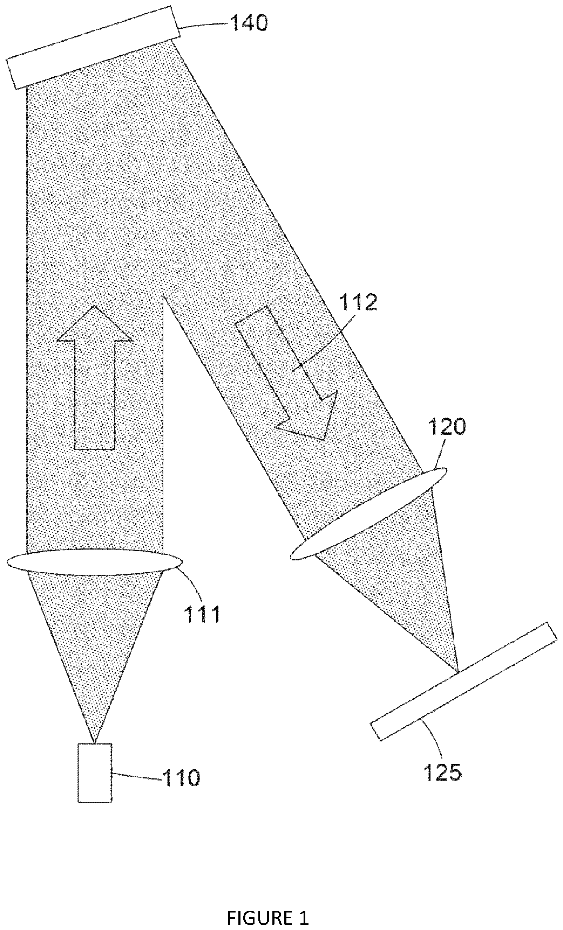

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms.

A Fourier transform hologram may be calculated using an algorithm such as the Gerchberg-Saxton algorithm. Furthermore, the Gerchberg-Saxton algorithm may be used to calculate a hologram in the Fourier domain (i.e. a Fourier transform hologram) from amplitude-only information in the spatial domain (such as a photograph). The phase information related to the object is effectively "retrieved" from the amplitude-only information in the spatial domain. In some embodiments, a computer-generated hologram is calculated from amplitude-only information using the Gerchberg-Saxton algorithm or a variation thereof.

The Gerchberg Saxton algorithm considers the situation when intensity cross-sections of a light beam, $I_A(x, y)$ and $I_B(x, y)$, in the planes A and B respectively, are known and $I_A(x, y)$ and $I_B(x, y)$ are related by a single Fourier transform. With the given intensity cross-sections, an approximation to the phase distribution in the planes A and B, $\Psi_A(x, y)$ and $\Psi_B(x, y)$ respectively, is found. The Gerchberg-Saxton algorithm finds solutions to this problem by following an iterative process. More specifically, the Gerchberg-Saxton algorithm iteratively applies spatial and spectral constraints while repeatedly transferring a data set (amplitude and phase), representative of $I_A(x, y)$ and $I_B(x, y)$, between the spatial domain and the Fourier (spectral or frequency) domain. The corresponding computer-generated hologram in the spectral domain is obtained through at least one iteration of the algorithm. The algorithm is convergent and arranged to produce a hologram representing an input image. The hologram may be an amplitude-only hologram, a phase-only hologram or a fully complex hologram.

In some embodiments, a phase-only hologram is calculated using an algorithm based on the Gerchberg-Saxton algorithm such as described in British patent 2,498,170 or 2,501,112 which are hereby incorporated in their entirety by reference. However, embodiments disclosed herein describe calculating a phase-only hologram by way of example only. In these embodiments, the Gerchberg-Saxton algorithm retrieves the phase information $\Psi[u, v]$ of the Fourier transform of the data set which gives rise to a known amplitude information $T[x, y]$, wherein the amplitude information $T[x, y]$ is representative of a target image (e.g. a photograph). Since the magnitude and phase are intrinsically combined in the Fourier transform, the transformed magnitude and phase contain useful information about the accuracy of the calculated data set. Thus, the algorithm may be used iteratively with feedback on both the amplitude and the phase information. However, in these embodiments, only the phase information $\Psi[u, v]$ is used as the hologram to form a holographic representative of the target image at an image plane. The hologram is a data set (e.g. 2D array) of phase values.

In other embodiments, an algorithm based on the Gerchberg-Saxton algorithm is used to calculate a fully-complex hologram. A fully-complex hologram is a hologram having a magnitude component and a phase component. The hologram is a data set (e.g. 2D array) comprising an array of complex data values wherein each complex data value comprises a magnitude component and a phase component.

In some embodiments, the algorithm processes complex data and the Fourier transforms are complex Fourier transforms. Complex data may be considered as comprising (i) a real component and an *imaginary* component or (ii) a *magnitude* component and a phase component. In some embodiments, the two components of the complex data are processed differently at various stages of the algorithm.

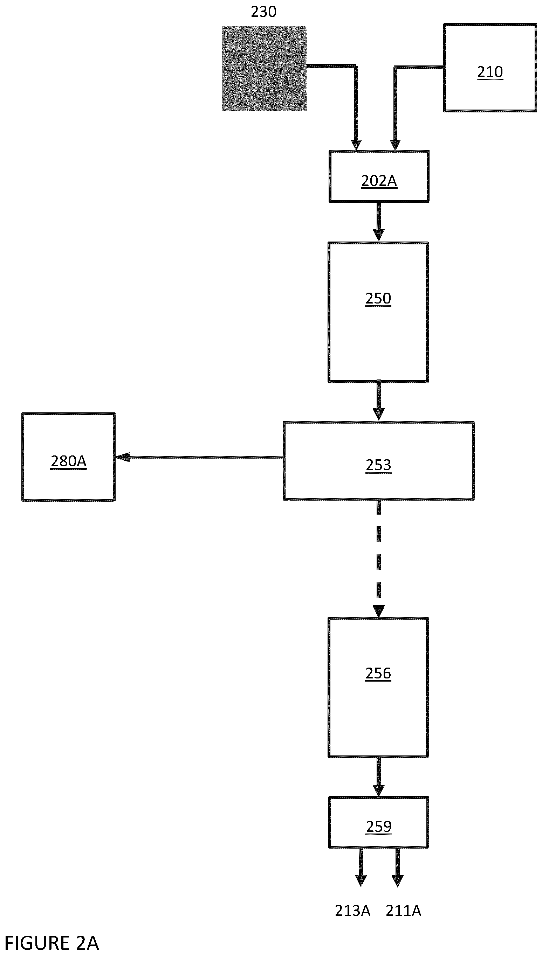

Figure 2A illustrates the first iteration of an algorithm in accordance with some embodiments for calculating a phase-only hologram. The input to the algorithm is an input image 210 comprising a 2D array of pixels or data values, wherein each pixel or data value is a magnitude, or amplitude, value. That is, each pixel or data value of the input image 210 does not have a phase component. The input image 210 may therefore be considered a magnitude-only or amplitude-only or intensity-only distribution. An example of such an input image 210 is a photograph or one frame of video comprising a temporal sequence of frames. The first iteration of the algorithm starts with a data forming step 202A comprising assigning a random phase value to each pixel of the input image, using a random phase distribution (or random phase seed) 230, to form a starting complex data set wherein each data element of the set comprising magnitude and phase. It may be said that the starting complex data set is representative of the input image in the spatial domain.

First processing block 250 receives the starting complex data set and performs a complex Fourier transform to form a Fourier transformed complex data set. Second processing block 253 receives the Fourier transformed complex data set and outputs a hologram 280A. In some embodiments, the hologram 280A is a phase-only hologram. In these embodiments, second processing block 253 quantises each phase value and sets each amplitude value to unity in order to form hologram 280A. Each phase value is quantised in accordance with the phase-levels which may be represented on the pixels of the spatial light modulator which will be used to "display" the phase-only hologram. For example, if each pixel of the spatial light modulator provides 256 different phase levels, each phase value of the hologram is quantised into one phase level of the 256 possible phase levels. Hologram 280A is a phase-only Fourier hologram which is representative of an input image. In other embodiments, the hologram 280A is a fully complex hologram comprising an array of complex data values (each including an amplitude component and a phase component) derived from the received Fourier transformed complex data set. In some embodiments, second processing block 253 constrains each complex data value to one of a plurality of allowable complex modulation levels to form hologram 280A. The step of constraining may include setting each complex data value to the nearest allowable complex modulation level in the complex plane. It may be said that hologram 280A is representative of the input image in the spectral or Fourier or frequency domain. In some embodiments, the algorithm stops at this point.

However, in other embodiments, the algorithm continues as represented by the dotted arrow in Figure 2A. In other words, the steps which follow the dotted arrow in Figure 2A are optional (i.e. not essential to all embodiments).

Third processing block 256 receives the modified complex data set from the second processing block 253 and performs an inverse Fourier transform to form an inverse Fourier transformed complex data set. It may be said that the inverse Fourier transformed complex data set is representative of the input image in the spatial domain.

Fourth processing block 259 receives the inverse Fourier transformed complex data set and extracts the distribution of magnitude values 211A and the distribution of phase values 213A. Optionally, the fourth processing block 259 assesses the distribution of magnitude values 211A. Specifically, the fourth processing block 259 may compare the distribution of magnitude values 211A of the inverse Fourier transformed complex data set with the input image 510 which is itself, of course, a distribution of magnitude values. If the difference between the distribution of magnitude values 211A and the input image 210 is sufficiently small, the fourth processing block 259 may determine that the hologram 280A is acceptable. That is, if the difference between the distribution of magnitude values 211A and the input image 210 is sufficiently small, the fourth processing block 259 may determine that the hologram 280A is a sufficiently-accurate representative of the input image 210. In some embodiments, the distribution of phase values 213A of the inverse Fourier transformed complex data set is ignored for the purpose of the comparison. It will be appreciated that any number of different methods for comparing the distribution of magnitude values 211A and the input image 210 may be employed and the present disclosure is not limited to any particular method. In some embodiments, a mean square difference is calculated and if the mean square difference is less than a threshold value, the hologram 280A is deemed acceptable. If the fourth processing block 259 determines that the hologram 280A is not acceptable, a further iteration of the algorithm may be performed. However, this comparison step is not essential and in other embodiments, the number of iterations of the algorithm performed is predetermined or preset or userdefined.

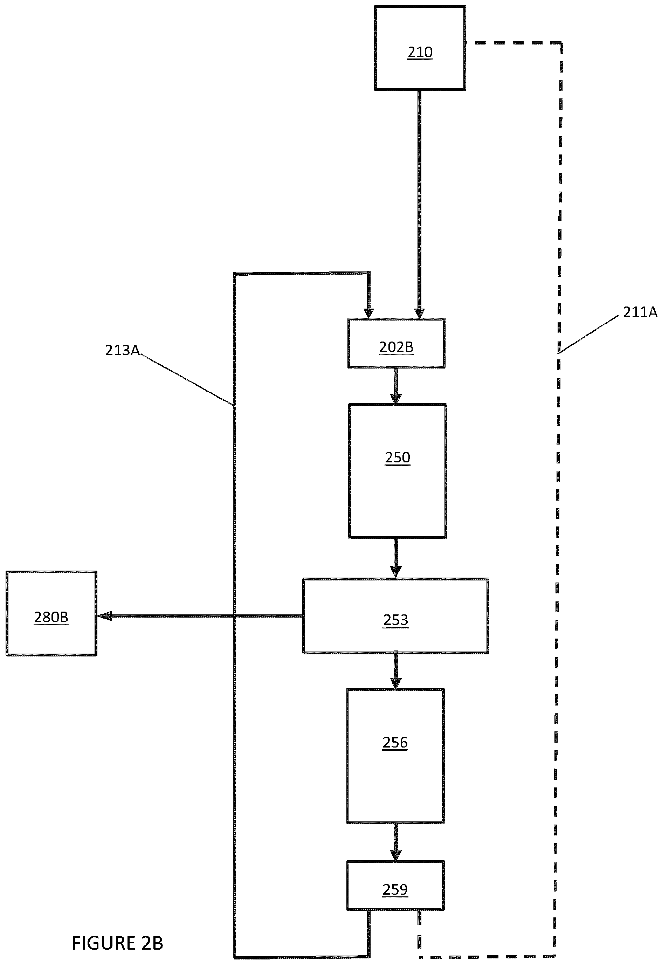

Figure 2B represents a second iteration of the algorithm and any further iterations of the algorithm. The distribution of phase values 213A of the preceding iteration is fed-back through the processing blocks of the algorithm. The distribution of magnitude values 211A is rejected in favour of the distribution of magnitude values of the input image 210. In the first iteration, the data forming step 202A formed the first complex data set by combining distribution of magnitude values of the input image 210 with a random phase distribution 230. However, in the second and subsequent iterations, the data forming step 202B comprises forming a complex data set by combining (i) the distribution of phase values 213A from the previous iteration of the algorithm with (ii) the distribution of magnitude values of the input image 210.

The complex data set formed by the data forming step 202B of Figure 2B is then processed in the same way described with reference to Figure 2A to form second iteration hologram 280B. The explanation of the process is not therefore repeated here. The algorithm may stop when the second iteration hologram 280B has been calculated. However, any number of further iterations of the algorithm may be performed. It will be understood that the third processing block 256 is only required if the fourth processing block 259 is required or a further iteration is required. The output hologram 280B generally gets better with each iteration. However, in practice, a point is usually reached at which no measurable improvement is observed or the positive benefit of performing a further iteration is out-weighted by the negative effect of additional processing time. Hence, the algorithm is described as iterative and convergent.

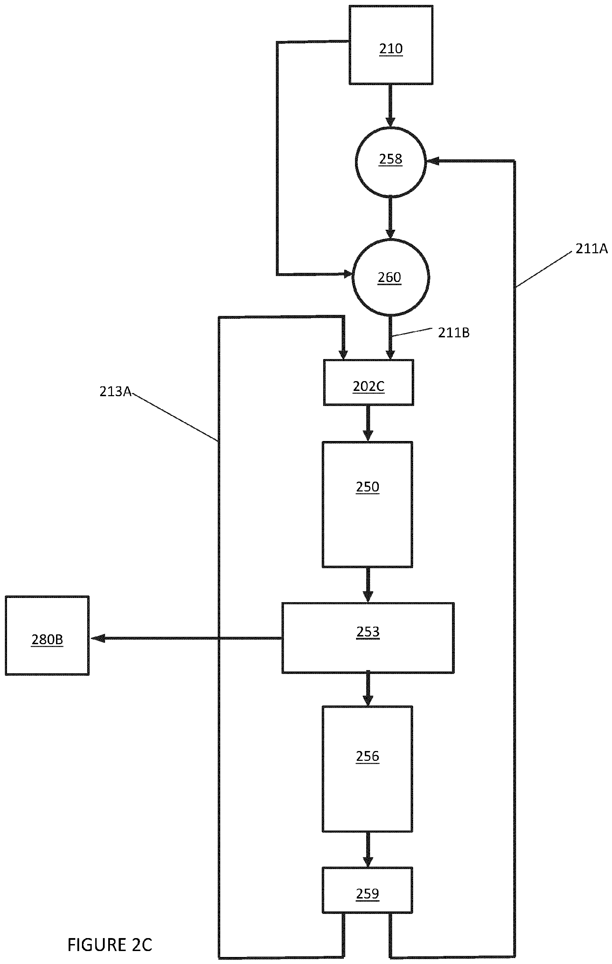

Figure 2C represents an alternative embodiment of the second and subsequent iterations. The distribution of phase values 213A of the preceding iteration is fed-back through the processing blocks of the algorithm. The distribution of magnitude values 211A is rejected in favour of an alternative distribution of magnitude values. In this alternative embodiment, the alternative distribution of magnitude values is derived from the distribution of magnitude values 211 of the previous iteration.

Specifically, processing block 258 subtracts the distribution of magnitude values of the input image 210 from the distribution of magnitude values 211 of the previous iteration, scales that difference by a gain factor $\alpha$ and subtracts the scaled difference from the input image 210. This is expressed mathematically by the following equations, wherein the subscript text and numbers indicate the iteration number:

$$R_{n+1}[x, y] = F'\{\exp(i\,\psi_n[u, v])\}$$

$$\psi_n[u,v] = \angle F\{\eta \cdot \exp(i\angle R_n[x,y])\}$$

$$\eta = T[x, y] - \alpha(|R_n[x, y]| - T[x, y])$$

where:

> F' is the inverse Fourier transform;
> F is the forward Fourier transform;
> R[x, y] is the complex data set output by the third processing block 256;
> T[x, y] is the input or target image;
> $\angle$ is the phase component;
> $\Psi$ is the phase-only hologram 280B;
> $\eta$ is the new distribution of magnitude values 211B; and
> $\alpha$ is the gain factor.

The gain factor $\alpha$ may be fixed or variable. In some embodiments, the gain factor $\alpha$ is determined based on the size and rate of the incoming target image data. In some embodiments, the gain factor $\alpha$ is dependent on the iteration number. In some embodiments, the gain factor $\alpha$ is solely function of the iteration number.

The embodiment of Figure 2C is the same as that of Figure 2A and Figure 2B in all other respects. It may be said that the phase-only hologram $\Psi(u, v)$ comprises a phase distribution in the frequency or Fourier domain.

In some embodiments, the Fourier transform is performed using the spatial light modulator. Specifically, the hologram data is combined with second data providing optical power. That is, the data written to the spatial light modulation comprises hologram data representing the object and lens data representative of a lens. When displayed on a spatial light modulator and illuminated with light, the lens data emulates a physical lens - that is, it brings light to a focus in the same way as the corresponding physical optic. The lens data therefore provides optical, or focusing, power. In these embodiments, the physical Fourier transform lens 120 of Figure 1 may be omitted. It is known how to calculate data representative of a lens. The data representative of a lens may be referred to as a software lens. For example, a phase-only lens may be formed by calculating the phase delay caused by each point of the lens owing to its refractive index and spatially-variant optical path length. For example, the optical path length at the centre of a convex lens is greater than the optical path length at the edges of the lens. An amplitude-only lens may be formed by a Fresnel zone plate. It is also known in the art of computer-generated holography how to combine data representative of a lens with a hologram so that a Fourier transform of the hologram can be performed without the need for a physical Fourier lens. In some embodiments, lensing data is combined with the hologram by simple addition such as simple vector addition. In some embodiments, a physical lens is used in conjunction with a software lens to perform the Fourier transform. Alternatively, in other embodiments, the Fourier transform lens is omitted altogether such that the holographic reconstruction takes place in the far-field. In further embodiments, the hologram may be combined in the same way with grating data - that is, data arranged to perform the function of a grating such as image steering. Again, it is known in the field how to calculate such data. For example, a phase-only grating may be formed by modelling the phase delay caused by each point on the surface of a blazed grating. An amplitude-only grating may be simply superimposed with an amplitude-only hologram to provide angular steering of the holographic reconstruction. The second data providing lensing and/or steering may be referred to as a light processing function or light processing pattern to distinguish from the hologram data which may be referred to as an image forming function or image forming pattern.

In some embodiments, the Fourier transform is performed jointly by a physical Fourier transform lens and a software lens. That is, some optical power which contributes to the Fourier transform is provided by a software lens and the rest of the optical power which contributes to the Fourier transform is provided by a physical optic or optics.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

Embodiments relate to Fourier holography and Gerchberg-Saxton type algorithms by way of example only. The present disclosure is equally applicable to Fresnel holography and Fresnel holograms which may be calculated by a similar method. The present disclosure is also applicable to holograms calculated by other techniques such as those based on point cloud methods.

Light modulation

A spatial light modulator may be used to display the diffractive pattern including the computer-generated hologram. If the hologram is a phase-only hologram, a spatial light modulator which modulates phase is required. If the hologram is a fully-complex hologram, a spatial light modulator which modulates phase and amplitude may be used or a first spatial light modulator which modulates phase and a second spatial light modulator which modulates amplitude may be used.

In some embodiments, the light-modulating elements (i.e. the pixels) of the spatial light modulator are cells containing liquid crystal. That is, in some embodiments, the spatial light modulator is a liquid crystal device in which the optically-active component is the liquid crystal. Each liquid crystal cell is configured to selectively-provide a plurality of light modulation levels. That is, each liquid crystal cell is configured at any one time to operate at one light modulation level selected from a plurality of possible light modulation levels. Each liquid crystal cell is dynamically-reconfigurable to a different light modulation level from the plurality of light modulation levels. In some embodiments, the spatial light modulator is a reflective liquid crystal on silicon (LCOS) spatial light modulator but the present disclosure is not restricted to this type of spatial light modulator.

A LCOS device provides a dense array of light modulating elements, or pixels, within a small aperture (e.g. a few centimetres in width). The pixels are typically approximately 10 microns or less which results in a diffraction angle of a few degrees meaning that the optical system can be compact. It is easier to adequately illuminate the small aperture of a LCOS SLM than it is the larger aperture of other liquid crystal devices. An LCOS device is typically reflective which means that the circuitry which drives the pixels of a LCOS SLM can be buried under the reflective surface. The results in a higher aperture ratio. In other words, the pixels are closely packed meaning there is very little dead space between the pixels. This is advantageous because it reduces the optical noise in the replay field. A LCOS SLM uses a silicon backplane which has the advantage that the pixels are optically flat. This is particularly important for a phase modulating device.

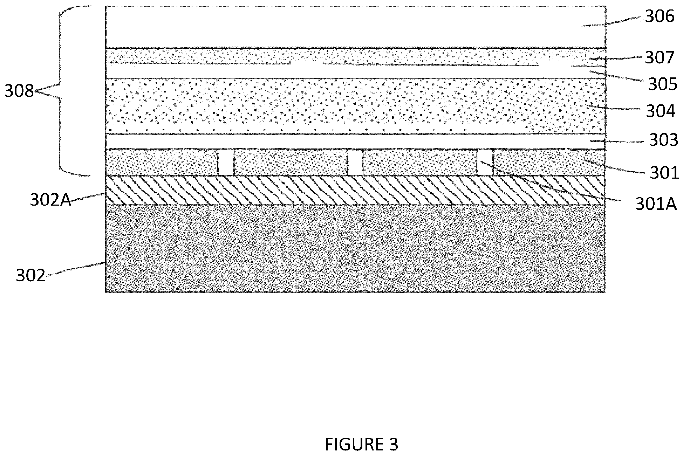

A suitable LCOS SLM is described below, by way of example only, with reference to Figure 3. An LCOS device is formed using a single crystal silicon substrate 302. It has a 2D array of square planar aluminium electrodes 301, spaced apart by a gap 301a, arranged on the upper surface of the substrate. Each of the electrodes 301 can be addressed via circuitry 302a buried in the substrate 302. Each of the electrodes forms a respective planar mirror. An alignment layer 303 is disposed on the array of electrodes, and a liquid crystal layer 304 is disposed on the alignment layer 303. A second alignment layer 305 is disposed on the planar transparent layer 306, e.g. of glass. A single transparent electrode 307 e.g. of ITO is disposed between the transparent layer 306 and the second alignment layer 305.

Each of the square electrodes 301 defines, together with the overlying region of the transparent electrode 307 and the intervening liquid crystal material, a controllable phase-modulating element 308, often referred to as a pixel. The effective pixel area, or fill factor, is the percentage of the total pixel which is optically active, taking into account the space between pixels 301a. By control of the voltage applied to each electrode 301 with respect to the transparent electrode 307, the properties of the liquid crystal material of the respective phase modulating element may be varied, thereby to provide a variable delay to light incident thereon. The effect is to provide phase-only modulation to the wavefront, i.e. no amplitude effect occurs.

The described LCOS SLM outputs spatially modulated light in reflection. Reflective LCOS SLMs have the advantage that the signal lines, gate lines and transistors are below the mirrored surface, which results in high fill factors (typically greater than 90%) and high resolutions. Another advantage of using a reflective LCOS spatial light modulator is that the liquid crystal layer can be half the thickness than would be necessary if a transmissive device were used. This greatly improves the switching speed of the liquid crystal (a key advantage for the projection of moving video images). However, the teachings of the present disclosure may equally be implemented using a transmissive LCOS SLM.

As described above, the principles of the present disclosure are applicable to nonholographic picture generating units as well as holographic picture generating units as described above.

Pointing error

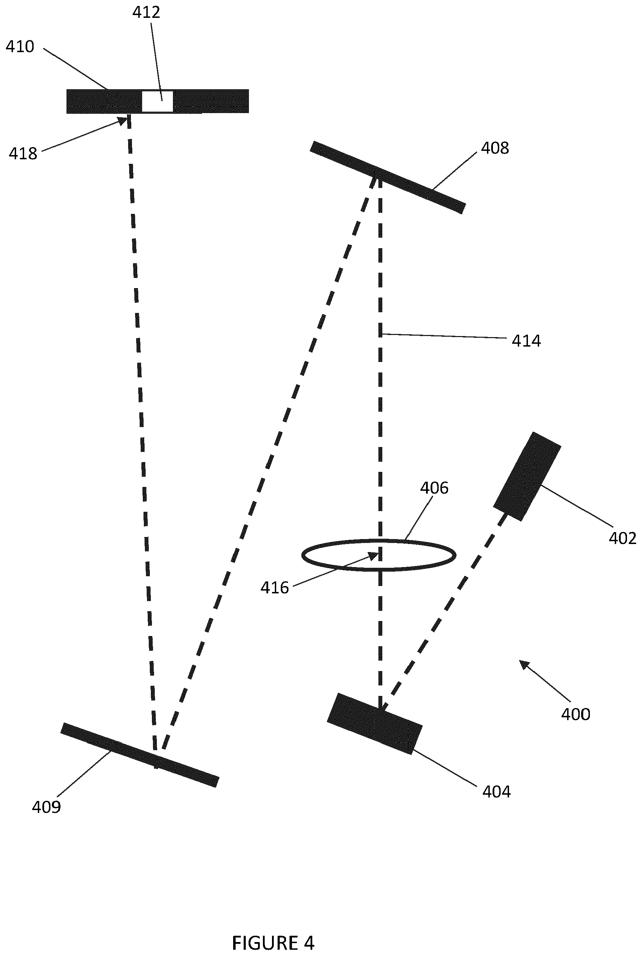

Figure 4 is a schematic cross-sectional view of a picture generating unit 400. The picture generating unit 400 comprises a light source 402 in the form of a laser. The picture generating unit further comprises a liquid crystal on silicon (LCoS) spatial light modulator 404, a lens 406 (which is a Fourier lens in this embodiment by way of example only), a first planar turn mirror 408, a second planar turn mirror 409 and a screen 410 (which is a diffuser in this embodiment by way of example only) comprising a target 412 shown centrally within the diffuser 410. The laser 402 emits light which propagates along a propagation axis 414 which effectively connects together each of the components of the picture generating unit 400. The propagation axis 414 is represented by the dashed / broken line in Figure 4. The beam of light may actually be much wider than the dashed / broken line shown in Figure 4. However, the propagation axis 414 represents the centre of the beam of light emitted by the laser as the light propagates through the picture generating unit 400. In other words, the propagation axis 414 is the optical axis through the picture generating unit. In some embodiments, the picture generating unit 400 further comprises at least one optic between the laser 402 and the spatial light modulator 404. The at least one optic may be arranged to expand the laser beam but is not shown in Figure 4. The at least one optic may comprise a collimating lens arranged to collimate the light emitted by the laser such that the spatial light modulator 404 is illuminated by substantially collimated light.

Light propagating along the propagation axis 414 illuminates the spatial light modulator 404. In this embodiment, the spatial light modulator is arranged to display a hologram of a picture. Thus, when the spatial light modulator 404 is illuminated, the light is spatially modulated in accordance with the hologram. In other embodiments, the spatial light modulator is arranged to display the picture itself or a phase-representation thereof. The spatially modulated light then continues along the propagation axis 414 to pass through the Fourier lens 406. The portion of the propagation axis 414 passing through the Fourier lens 406 may be referred to as the first portion 416 of the propagation axis. After passing through the Fourier lens, the spatially modulated light continues along the propagation axis 414 to be reflected / turned by the first planar turn mirror 408 and then to be reflected / turned by the second planar turn mirror 408 before finally being incident on the diffuser 410. A second portion 418 of the propagation axis 414 is adjacent the target 412. An image (holographic reconstruction) of the picture encoded in the hologram is formed on the diffuser.

The picture generating unit 400 is configured such that the second portion 418 of the propagation axis 414 is incident at the centre of the target 412. However, as shown in Figure 4, the picture generating 400 has a pointing error which means that rather than the second portion of the propagation axis 414 being centred on the target 412, it is pointing slightly to the left of the target, as drawn in Figure 4. It is practically impossible to manufacture the picture generating unit 400 without a pointing error. In particular, because of manufacturing tolerances, for example, any or each of the components of the picture generating unit may be slightly misaligned immediately following the assembly of the picture generating unit. The laser 402 may also be slightly misaligned and the central maximum of the beam profile of the laser 402 may also deviate slightly from the geometric centre of the beam / from the propagation axis. These misalignments result in the pointing error / misalignment shown in Figure 4.

Having a pointing error is undesirable. The pointing error can adversely affect the quality of the image that is formed by the picture generating unit. For example, the pointing error may cause blurring of the image. Another problem with the pointing error is that noise may not correctly be removed from the image. One source of noise is the so-called DC spot. The DC spot is formed centrally within the light beam and effectively follows the propagation axis 414 (in particular, DC spot light of the zeroth order follows the propagation axis). In some embodiments, the picture generating unit 400 comprises a block or mask which is arranged (e.g. shaped and positioned) to treat the DC spot differently to the rest of the light beam (not shown in Figure 4). For example, a block may absorb the DC spot while allowing the remaining (non-DC spot) light to travel past. Clearly, this arrangement requires the propagation axis 414 to be properly aligned such that the block (or mask) is aligned with the DC spot so as to absorb the DC spot. However, the pointing error shown in Figure 4 means that the DC spot may not be properly aligned with the block (or mask) such that a portion of the DC spot may not be absorbed by the block. That portion may reach the viewing system and may be considered noise.

Calibration to compensate for pointing error

Given the problems caused by the pointing error, it is important to calibrate the picture generating unit 400 to compensate for the pointing error. Previously, this calibration has been a laborious, slow and complex process which required each component within the picture generating unit to be checked and, if necessary, adjusted. The adjustments required to each individual component could be translational adjustments which could be adjustment in any of three orthogonal dimensions and / or could be rotational and / or tilt adjustments. The complexity of the previous calibration methods placed a limit on the rate of production of picture generating units (particularly given previous calibration methods generally have needed to be performed on the manufacturing line).

The inventors have developed an improved calibration method. Rather than adjusting each individual component of the picture generating unit, the inventors have surprisingly found that it is possible to apply an intentional offset / misalignment / pointing error of the Fourier lens with respect to the first portion 416 of the propagation axis 414 to compensate for all other misalignments within the picture generating. In more detail, the inventors have found that moving (i.e. changing the relative position of) the Fourier lens with respect to the propagation axis changes a steering effect of light passing through the Fourier lens. By fine tuning the offset between the first portion 416 of the propagation axis 414 and the Fourier lens 406, appropriate beam steering by the Fourier lens can be achieved which compensates for the pointing error of the system.

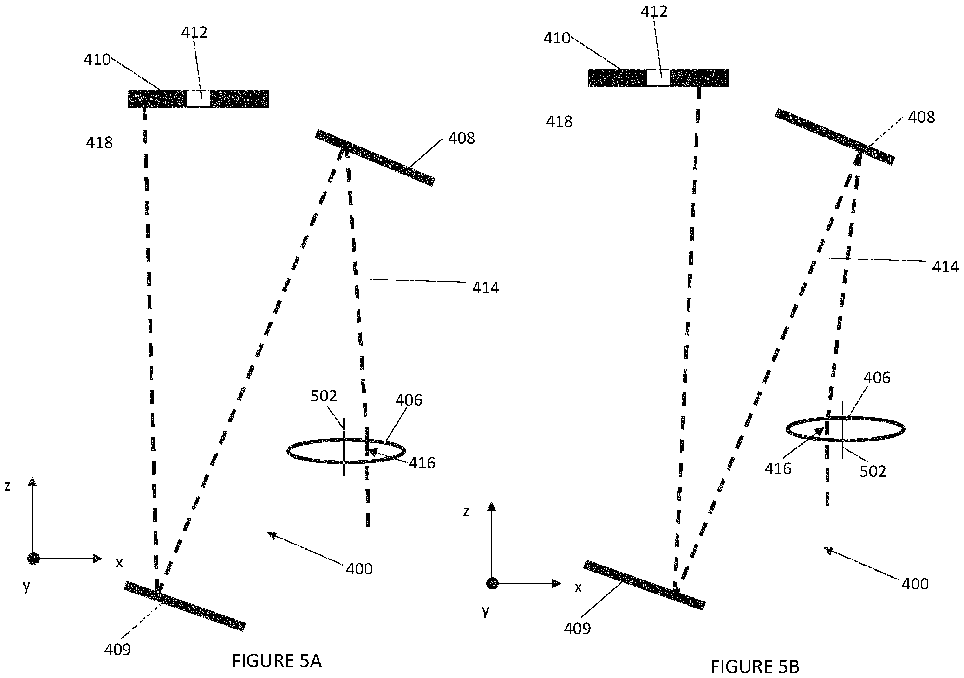

Beam steering by changing the relative position of the propagation axis 414 and the Fourier lens 406 is shown in Figures 5A and 5B. Figures 5A and 5B show cross-sectional schematic views of components of the picture generating unit 400 of Figure 4. The laser 402 and spatial modulator 404 are not included in Figures 5A and 5B, but each of the Fourier lens 406, first planar turn mirror 408, second planar turn mirror 408 and diffuser 410 comprising target 412 are shown in Figures 5A and 5B. Figures 5A and 5B further show the optical axis 502 of the Fourier lens 406. The optical axis 502 is substantially parallel to the first portion 416 of the propagation axis 414 which passes through the Fourier lens 406. An offset between the optical axis 502 and the first portion 416 of the propagation axis 414 is present in both Figures 5A and 5B but the offset is different in Figure 5A relative to 5B. Figures 5A and 5B show how changing the offset steers the light beam (propagation axis 414). In Figure 5A, the offset is such that the propagation axis 414 passes through Fourier lens 406 to the right of the optical axis (as viewed in Figure 5A). In Figure 5B, the offset is such that the propagation axis 414 passes through Fourier lens 406 to the left of the optical axis (as viewed in Figure 5B). Changing the part of the Fourier lens 406 that the propagation axis 414 passes through changes the steering of the light beam (propagation axis 414). In particular, Figures 5A and 5B show how the differences in offset result in different steering of the propagation axis 414 such that the second portion of the propagation axis 414 (at the diffuser 410) is incident on a left portion of the diffuser in Figure 5A and incident on a right portion of the diffuser in Figure 5B.

Figures 5A and 5B show a cross-sectional view in the x-z plane (with respect to the coordinates shown in these Figures). The change in offset between the Fourier lens 406 and the propagation axis 414 shown in Figure 5A relative to Figure 5B is achieved as a result of relative movement between the propagation axis 414 and the Fourier lens 406 in the x direction. This causes beam steering in the x direction at the diffuser (in the embodiment shown in Figures 5A and 5B). However, it should be clear to the skilled person that beam steering in the y direction can be achieved by changing the offset in the y direction.

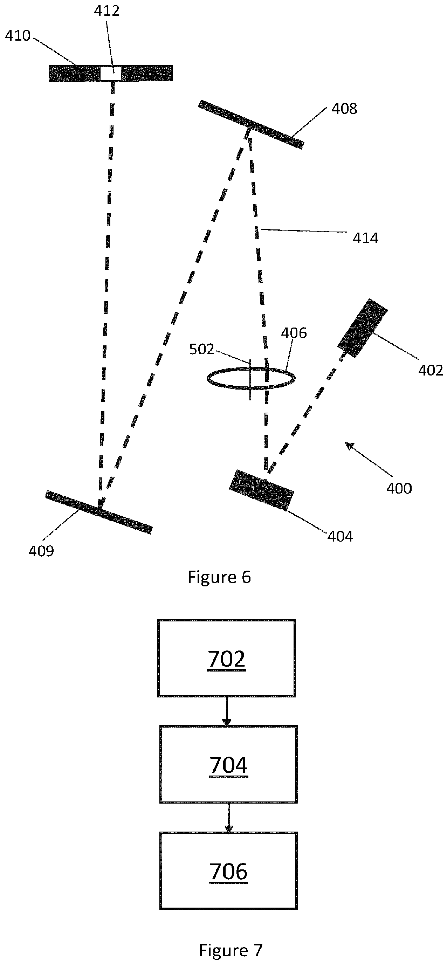

Figure 6 shows the picture generating unit 400 of Figure 4 after calibration. The optical axis of the Fourier lens 406 is offset with respect to the first portion 416 of the propagation axis 414 such that the pointing error is compensated for and the second portion of the propagation axis 414 is incident on the diffuser 410 at the centre of the target 412.

Figure 7 shows a flow chart representing a method of calibrating a picture generating unit in accordance with the invention.

Step 702 of the method comprises using the laser 402 to propagate light along the propagation axis 414. This step further comprises displaying a hologram of a picture on the spatial light modulator 404, and may optionally comprise calculating the hologram using a hologram engine. As described previously, the light propagated in step 702 illuminates the spatial light modulator 404 so as to spatially modulate the light. A first portion 416 of the propagation axis passes through the Fourier lens 406. The propagation axis 414 connects / passes through the Fourier lens 406, the two mirrors 408, 409 and is incident on the diffuser 410. As described, there may be a pointing error such that the propagation axis 414 is not incident on the centre of the target 412 (as shown in Figure 4).

Step 704 of the method comprises measuring the pointing error between the second portion of the propagation axis 414 and the target 412. In some embodiments, step 704 comprises measuring a DC spot of the light at or downstream of the diffuser. As described previously, the picture generating unit may comprise a means (such as a block or mask) for separating / removing the DC spot but the DC spot may only be completely removed if picture generating unit 400 is correctly aligned / calibrated. Thus, by measuring the presence / intensity / size of a DC spot downstream of the means for separating / removing the DC spot, a pointing error may be determined. For example, a larger pointing error may be determined the greater the intensity or size of the DC spot.

Step 706 of the method comprises changing the position of the first portion of the propagation axis 414 with respect to the optical axis 502 of the Fourier lens 406. In this embodiment, the Fourier lens 406 may be moved while the first portion of the propagation axis 414 is maintained in a constant position to achieve the relative change in position of the two features. The Fourier lens 406 is moveable within a first plane defined by the x-y plane (as shown in Figures 5A and 5B). The Fourier lens 406 is moved in the x-y plane in either or both of the x and y direction so as to reduce / minimize the pointing error.

In some embodiments, steps 704 and 706 are repeated a plurality of times. For example, the pointing error may be continuously measured and the relative position of the first portion of the propagation axis 414 with respect to the optical axis 502 of the Fourier lens 406 may subsequently adjusted to reduce the pointing error until a threshold (maximum) pointing error is reached such that the pointing error is acceptably low (if not eliminated). In other words, the method may be iterative.

At least one of steps 704 and 706 may be computer implemented. For example, the picture generating unit 400 may comprise a controller. To perform step 804, the controller may be receive measurements / signals from a detector arranged to measure light propagating along the propagation axis 414. In some embodiments, the detector may be measured to measure the presence (or absence) of a DC spot to infer the pointing error. To perform step 706, the controller may be arranged to control a movement assembly configured to move the Fourier lens. The controller may be arranged to determine / calculate a positional change of the Fourier lens 406 in response to the detected pointing error.

In some embodiments, steps 704 and / or 706 are performed manually. For example, a user may adjust / move the Fourier lens 406 in order to reduce or minimize a DC spot. Alternatively, these steps may be computer implemented.

It has been described how the relative position of the Fourier lens 406 can be altered relative to the propagation axis 414 to steer a beam to compensate for pointing errors. However, it should be clear that other lenses in the system can similarly be moved with respect to the propagation axis 414 to achieve appropriate beam steering. In particular, a collimating lens of the beam expander (referred to above) may be moved or moveable in a method of calibrating a picture generating unit to reduce / eliminate pointing error. It has been described that step 706 of the method comprises moving the lens (in this example, the Fourier lens 406 - but could also be a collimating lens). However, it should be clear that the position of the first portion of the propagation axis 414 can be changed with respect to the optical axis 502 of the lens by moving the propagation axis 414 (e.g. by moving the light source).

Additional features

Embodiments refer to an electrically-activated LCOS spatial light modulator by way of example only.

The teachings of the present disclosure may equally be implemented on any spatial light modulator capable of displaying a computer-generated hologram in accordance with the present disclosure such as any electrically-activated SLMs, optically-activated SLM, digital micromirror device or microelectromechanical device, for example.

In some embodiments, the light source is a laser such as a laser diode. In some embodiments, the detector is a photodetector such as a photodiode. In some embodiments, the light receiving surface is a diffuser surface or screen such as a diffuser. The holographic projection system of the present disclosure may be used to provide an improved head-up display (HUD) or head-mounted display. In some embodiments, there is provided a vehicle comprising the holographic projection system installed in the vehicle to provide a HUD. The vehicle may be an automotive vehicle such as a car, truck, van, lorry, motorcycle, train, airplane, boat, or ship.

The quality of the holographic reconstruction may be affect by the so-called zero order problem which is a consequence of the diffractive nature of using a pixelated spatial light modulator. Such zero-order light can be regarded as "noise" and includes for example specularly reflected light, and other unwanted light from the SLM.

In the example of Fourier holography, this "noise" is focussed at the focal point of the Fourier lens leading to a bright spot at the centre of the holographic reconstruction. The zero order light may be simply blocked out however this would mean replacing the bright spot with a dark spot. Some embodiments include an angularly selective filter to remove only the collimated rays of the zero order.

Embodiments also include the method of managing the zero-order described in European patent 2,030,072, which is hereby incorporated in its entirety by reference.

In some embodiments, the size (number of pixels in each direction) of the hologram is equal to the size of the spatial light modulator so that the hologram fills the spatial light modulator. That is, the hologram uses all the pixels of the spatial light modulator. In other embodiments, the hologram is smaller than the spatial light modulator. More specifically, the number of hologram pixels is less than the number of light-modulating pixels available on the spatial light modulator. In some of these other embodiments, part of the hologram (that is, a continuous subset of the pixels of the hologram) is repeated in the unused pixels. This technique may be referred to as "tiling" wherein the surface area of the spatial light modulator is divided up into a number of "tiles", each of which represents at least a subset of the hologram. Each tile is therefore of a smaller size than the spatial light modulator. In some embodiments, the technique of "tiling" is implemented to increase image quality. Specifically, some embodiments implement the technique of tiling to minimise the size of the image pixels whilst maximising the amount of signal content going into the holographic reconstruction. In some embodiments, the holographic pattern written to the spatial light modulator comprises at least one whole tile (that is, the complete hologram) and at least one fraction of a tile (that is, a continuous subset of pixels of the hologram).

In embodiments, only the primary replay field is utilised and system comprises physical blocks, such as baffles, arranged to restrict the propagation of the higher order replay fields through the system.

In embodiments, the holographic reconstruction is colour. In some embodiments, an approach known as spatially-separated colours, "SSC", is used to provide colour holographic reconstruction. In other embodiments, an approach known as frame sequential colour, "FSC", is used.

The method of SSC uses three spatially-separated arrays of light-modulating pixels for the three single-colour holograms. An advantage of the SSC method is that the image can be very bright because all three holographic reconstructions may be formed at the same time. However, if due to space limitations, the three spatially-separated arrays of light-modulating pixels are provided on a common SLM, the quality of each single-colour image is sub-optimal because only a subset of the available light-modulating pixels is used for each colour. Accordingly, a relatively low-resolution colour image is provided.

The method of FSC can use all pixels of a common spatial light modulator to display the three single-colour holograms in sequence. The single-colour reconstructions are cycled (e.g. red, green, blue, red, green, blue, etc.) fast enough such that a human viewer perceives a polychromatic image from integration of the three single-colour images. An advantage of FSC is that the whole SLM is used for each colour. This means that the quality of the three colour images produced is optimal because all pixels of the SLM are used for each of the colour images. However, a disadvantage of the FSC method is that the brightness of the composite colour image is lower than with the SSC method - by a factor of about 3 - because each single-colour illumination event can only occur for one third of the frame time. This drawback could potentially be addressed by overdriving the lasers, or by using more powerful lasers, but this requires more power resulting in higher costs and an increase in the size of the system.

Examples describe illuminating the SLM with visible light but the skilled person will understand that the light sources and SLM may equally be used to direct infrared or ultraviolet light, for example, as disclosed herein. For example, the skilled person will be aware of techniques for converting infrared and ultraviolet light into visible light for the purpose of providing the information to a user. For example, the present disclosure extends to using phosphors and/or quantum dot technology for this purpose.

Some embodiments describe 2D holographic reconstructions by way of example only. In other embodiments, the holographic reconstruction is a 3D holographic reconstruction. That is, in some embodiments, each computer-generated hologram forms a 3D holographic reconstruction.

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

**Claims**

1. A method of calibrating a picture generating unit to compensate for a misalignment of the picture generating unit, the method comprising:

   displaying a pattern corresponding to a picture on a spatial light modulator;
   propagating light along a propagation axis wherein the light illuminates the spatial light modulator so as to spatially modulate the light, a first portion of the propagation axis passing through a first lens of the picture generating unit; and
   changing the position of the first portion of the propagation axis with respect to an optical axis of the first lens to introduce or change an offset between the first portion and the optical axis, wherein the offset compensates for the misalignment;
   wherein the first portion of the propagation axis is substantially parallel to the optical axis of the first lens.

2. A method as claimed in claim 1, further comprising the step of determining a misalignment between a second portion of the propagation axis and a target, the second portion of the propagation axis being at or adjacent to the target, optionally wherein the step of determining a misalignment is performed prior to changing the position of the first portion of the propagation axis with respect to the optical axis of the first lens.

3. A method as claimed in claim 2, wherein the step of determining the misalignment comprises determining a position of the second portion of the propagation axis at or adjacent to the target.

4. A method as claimed in claim 2 or 3, wherein the step of determining the misalignment comprises measuring a DC spot of the propagated light.

5. A method as claimed in claim 4, wherein the step of measuring a DC spot of the propagated light comprises measuring at least one of a position of the DC spot, a misalignment of the DC spot with respect to the target, and an intensity of the DC spot, optionally wherein changing the position of the first portion of the propagation axis with respect to the optical axis of the first lens comprises changing the position to move the DC spot.

6. A method as claimed in any preceding claim, wherein the step of changing the position of the first portion of the propagation axis with respect to the optical axis of the first lens comprises moving the first lens, optionally moving the first lens in a first plane, the first plane having a normal that is parallel to the first portion of the propagation axis.

7. A picture generating unit comprising:

a spatial light modulator arranged to display a pattern corresponding to a picture;
a light source arranged to illuminate the spatial light modulator such that light is spatially modulated; and a first lens having an optical axis;
wherein the picture generating unit is arranged such that the light emitted by the light source propagates along a propagation axis, a first portion of the propagation axis passing through the first lens; and
wherein the first portion of the propagation axis is substantially parallel to the optical axis of the first lens and is offset from the optical axis to compensate for a misalignment in the picture generating unit.

8. A picture generating unit according to claim 7, wherein the picture generating unit is configurable between a first configuration and a second configuration, wherein the optical axis of the first lens has a first position relative to the first portion of the propagation axis in the first configuration and a second position relative to the first portion of the propagation axis in the second configuration.

9. A picture generating unit according to claim 8, wherein the picture generating unit further comprises a movement assembly arranged to reconfigure the picture generating unit from the first configuration to the second configuration by changing the relative position of the first portion of the propagation axis and the optical axis of the first lens.

10. A picture generating unit according to any one of claims 7 to 9, wherein the picture generating unit further comprises a controller.

11. A picture generating unit according to claim 10, wherein the controller is configured to determine a misalignment between a second portion of the propagation axis and a target, optionally wherein the picture generating unit further comprises a detector arranged to measure the intensity of light; wherein the controller is arranged to determine the misalignment based on signals received from the detector.

12. A picture generating unit according to claim 11 when dependent on claim 8, wherein the controller is configured to determine the second configuration of the picture generating unit based on the determined misalignment; and wherein the controller is configured to control the movement assembly to reconfigure the picture generating unit from the first configuration to the determined second configuration.

13. A picture generating unit according to any one of claims 7 to 12, wherein the optical assembly further comprises a light receiving surface downstream of the spatial light modulator and arranged such that a holographic reconstruction is formed or displayed thereon.

14. A picture generating unit according to any one of claims 7 to 13, wherein the first lens is a Fourier lens or a collimating lens.

15. A picture generating unit according to any one of claims 7 to 14, wherein the optical assembly further comprises a block or mask downstream of the spatial light modulator arranged to remove DC spot.

FIGURE 1

230

210

202A

250

253

280A

256

259

213A    211A

FIGURE 2A

FIGURE 2B

FIGURE 2C

EP 4 398 043 A1

FIGURE 3

FIGURE 4

FIGURE 5A

FIGURE 5B

Figure 6

Figure 7

**European Patent Office**
Europäisches Patentamt
European Patent Office
Office européen des brevets

# EUROPEAN SEARCH REPORT

Application Number

EP 23 21 4514

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 466 023 A (LIGHT BLUE OPTICS LTD [GB]) 9 June 2010 (2010-06-09) | 1-3,6-14 | INV. G03H1/22 |
| A | * abstract * <br> * figures 1a-1e,2,5a-5c * <br> * page 6, line 25 - page 7, line 5 * <br> * page 11, line 5 - page 12, line 21 * <br> * page 20, line 1 - page 21, line 6 * <br> ----- | 4,5,15 | |

**TECHNICAL FIELDS SEARCHED (IPC)**

G03H

The present search report has been drawn up for all claims

| Place of search | Date of completion of the search | Examiner |
|---|---|---|
| Munich | 31 May 2024 | Sittler, Gilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4514

31-05-2024

| Patent document cited in search report | Publication date | Patent family member(s) | Publication date |
|---|---|---|---|
| GB 2466023 A | 09-06-2010 | GB 2466023 A | 09-06-2010 |
| | | US 2010142016 A1 | 10-06-2010 |
| | | WO 2010067100 A1 | 17-06-2010 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2498170 A
- GB 2501112 A

- EP 2030072 A